(19) Europäisches Patentamt
European Patent Office
Office européen des brevets

(11) **EP 1 399 344 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(21) Anmeldenummer: **02748753.7**

(22) Anmeldetag: **10.06.2002**

(51) Int Cl.:
*B60T 8/1755* (2006.01)   *B60K 28/16* (2006.01)
*B60K 31/00* (2006.01)   *B60K 31/04* (2006.01)
*B60K 31/10* (2006.01)

(86) Internationale Anmeldenummer:
**PCT/EP2002/006343**

(87) Internationale Veröffentlichungsnummer:
**WO 2002/100696 (19.12.2002 Gazette 2002/51)**

(54) **VERFAHREN ZUR REGELUNG DER FAHRSTABILITÄT**

METHOD FOR CONTROLLING DRIVING STABILITY

PROCEDE DE REGULATION DE LA STABILITE DIRECTIONNELLE D'UN VEHICULE

(84) Benannte Vertragsstaaten:
**DE FR IT**

(30) Priorität: **13.06.2001 DE 10128357**

(43) Veröffentlichungstag der Anmeldung:
**24.03.2004 Patentblatt 2004/13**

(73) Patentinhaber: **Continental Teves AG & Co. oHG 60488 Frankfurt am Main (DE)**

(72) Erfinder:
• **KÜMMEL, Martin**
  **34286 Spangenberg (DE)**
• **SCHAFIYHA, Schahrad**
  **65929 Frankfurt (DE)**
• **RAULFS, Henning**
  **61352 Bad Homburg (DE)**

(56) Entgegenhaltungen:
**EP-A- 1 087 358     DE-A- 19 615 311**
**DE-A- 19 848 236     DE-A- 19 907 633**

**Beschreibung**

Die Erfindung betrifft ein Verfahren zur Regelung der Fahrstabilität eines Fahrzeugs, bei dem anhand von mehreren Eingangsgrößen die Fahrgeschwindigkeit des Fahrzeugs auf eine Grenzgeschwindigkeit geregelt wird und eine Fahrstabilitätsregelung.

Eine nicht angepaßte Fahrzeuggeschwindigkeit kann in gegebenen Fahrsituationen zu Fahrzeuginstabilitäten führen. Es sind verschiedene Fahrstabilitätsregelungen bekannt geworden, die das Ziel haben, den Fahrzeuginstabilitäten selbsttätig entgegenzuwirken.

Grundsätzlich lassen sich fünf Prinzipien unterscheiden, die das Fahrverhalten eines Fahrzeugs mittels vorgebbarer Drücke bzw. Bremskräfte in oder an einzelnen Radbremsen und mittels Eingriff in das Motormanagement des Antriebsmotors beeinflussen. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, um eine Kippregelung (ARB), die ein Kippen des Fahrzeugs um seine Längsachse verhindert, sowie um eine Giermomentregelung (ESP), welche für stabile Fahrzustände beim Gieren des Fahrzeugs um die Hochachse sorgt.

Mit Fahrzeug ist also in diesem Zusammenhang ein Kraftfahrzeug mit vier Rädern gemeint, welches mit einer hydraulischen, elektro-hydraulischen oder elektro-mechanischen Bremsanlage ausgerüstet ist. In der hydraulischen Bremsanlage kann mittels eines pedalbetätigten Hauptzylinders vom Fahrer ein Bremsdruck aufgebaut werden, während die elektro-hydraulischen und elektro-mechanischen Bremsanlagen eine vom sensierten Fahrerbremswunsch abhängige Bremskraft aufbauen.

Weiterhin ist das Fahrzeug mit einer thermodynamischen oder elektrischen Antriebsanlage ausgestattet, die ein vom Fahrerwunsch abhängiges Vortriebsmoment über den Antriebsstrang auf mindestens ein Rad des Fahrzeugs aufbringt.

Zur Erfassung von fahrdynamischen Zuständen sind vier Drehzahlsensoren, pro Rad einer, ein Giergeschwindigkeitssensor, ein Querbeschleunigungssensor und mindestens ein Drucksensor für den vom Bremspedal erzeugten Bremsdruck vorhanden. Dabei kann der Drucksensor auch ersetzt sein durch einen Pedalweg- oder Pedalkraftmesser, falls die Hilfsdruckquelle derart angeordnet ist, daß ein vom Fahrer aufgebauter Bremsdruck von dem der Hilfsdruckquelle nicht unterscheidbar ist. Zusätzlich werden das aktuell von der Antriebsanlage erzeugte Antriebsmoment und das vom Fahrer gewünschte Moment bestimmt. Dabei kann es sich auch um indirekt ermittelte Größen handeln, die beispielsweise aus einem Motorkennfeld abgeleitet werden.

Bei einer Fahrstabilitätsregelung wird das Fahrverhalten eines Fahrzeugs derart beeinflußt, daß es für den Fahrer in kritischen Situationen besser beherrschbar wird. Eine kritische Situation ist hierbei ein instabiler Fahrzustand, in welchem im Extremfall das Fahrzeug den Vorgaben des Fahrers nicht folgt. Die Funktion der Fahrstabilitätsregelung besteht also darin, innerhalb der physikalischen Grenzen in derartigen Situationen dem Fahrzeug das vom Fahrer gewünschte Fahrzeugverhalten zu verleihen. Während für die Bremsschlupfregelung, die Antriebsschlupfregelung und die elektronische Bremskraftverteilung in erster Linie der Längsschlupf der Reifen auf der Fahrbahn von Bedeutung ist, fließen in die Giermomentregelung (GMR) weitere Größen ein, beispielsweise die Gierwinkelgeschwindigkeit und die Schwimmwinkelgeschwindigkeit.

Ursache der kritischen Situation ist zumeist eine der gegebenen Fahrsituation nicht angepaßte, im allgemeinen zu hohe Fahrgeschwindigkeit. Die gegebene Fahrsituation ist hierbei durch einen vorgegebenen, gewünschten Kurvenradius und den Reibwert zwischen Reifen und Fahrbahn gekennzeichnet.

Wünschenswert wäre es, instabile Fahrsituationen, die vom Fahrer oftmals nicht beherrscht werden, von vornherein zu vermeiden, so daß kritische Fahrsituationen erst gar nicht entstehen können.

Im Stand der Technik Sind Verfahren sowie Fahrdynamikregelsysteme bekannt, die eine drohende Fahrzeuginstabilität durch zu hohe Fahrgeschwindigkeit erkennen und zur vorsteuernden Vermeidung instabiler Fahrzustände diesen bereits im Entstehen entgegenwirken.

Eine Möglichkeit einer Absenkung der Geschwindigkeit des Fahrzeugs im Untersteuerfall ist in der EP 0945320 A1 beschrieben, in der aus der Abweichung des gemessenen Lenkwinkels von einem berechneten Lenkwinkel ein Einstellwert für die Längsverzögerung berechnet wird. Bei der Berechnung des Lenkwinkels wird neben anderen Größen ein in Echtzeit geschätzter maximaler Wert der Querbeschleunigung (Sättigungswert) berücksichtigt.

In der DE 19907633 A1 wird ein gattungsgemäßes Verfahren so durchgeführt, daß auf Basis von Meßgrößen, die mit Hilfe von Erfassungseinrichtungen ermittelt werden und die den aktuellen Lenkwinkel und die aktuelle Querbeschleunigung wiedergeben, unter Einbeziehung von weiteren Größen des Fahrzeugs und/ oder von Fahrsituationen eine modellbasierte stabile Grenzgeschwindigkeit des Fahrzeugs ermittelt wird, wobei ein Vergleich der Fahrgeschwindigkeit mit der modellbasierten stabilen Grenzgeschwindigkeit des Fahrzeugs vorgenommen wird und nach Maßgabe des Vergleichsergebnisses die Fahrgeschwindigkeit zu der Grenzgeschwindigkeit hingeführt wird, wenn die Grenzgeschwindigkeit von der Fahrgeschwindigkeit überschritten wird.

Durch ein solches Verfahren wird die Fahrgeschwindigkeit zur vorsteuernden Vermeidung instabiler Fahrzustände insbesondere bei Kurvenfahrten an die modellbasierte stabile Grenzgeschwindigkeit anpaßt und so verhindert, daß durch zu starke Fahrzeugbeschleunigung die Fahrzeuggeschwindigkeit eine aus der Fahrsituation abgeleitete Maximalgeschwindigkeit überschreitet. Hierzu wird bei einer gegebenen Fahrsituation die Maximalgeschwindigkeit ermittelt, mit der die Fahrsituation an der Stabilitätsgrenze durchfahren werden kann. Weiterhin wird ermittelt, ob eine Tendenz zum Überschreiten dieser Maximalgeschwindigkeit und somit eine Tendenz zu einem nachfolgenden instabilen Fahrverhalten vorliegt, und daß in diesem Fall das Fahrzeug am Überschreiten der Maximalgeschwindigkeit durch einen Motor- bzw. Bremseneingriff bereits bei einem stabilen Fahrverhalten gehindert wird. Hierdurch wird eine kritische Fahrsituation bereits beim Entstehen entweder vermieden oder die Instabilität auf ein Maß reduziert, daß die Situation vom Fahrer beherrscht werden kann. Damit wird einer drohenden Fahrzeuginstabilität bereits im Entstehen entgegengewirkt, so daß bei Kurvenfahrten instabile Fahrzustände, bei denen zum Beispiel der Giermomentenregler (ESP-Eingriffe) eingreifen müßte, vermieden werden können. Der Erfindung liegt die Aufgabe zugrunde, die bekannte Fahrstabilitötsregelung weiter zu versessern, bzw. robuster zu gestalten. Dabei wird in Abhängigkeit von Fahrzeugzustandsgrößen und/oder von Informationen über das Fahrverhalten bzw. die Fahrsituation festgelegt, wie die stabile Grenzgeschwindigkeit modelliert wird, indem die tolerierte Lenkwinkelabweichung verändert wird.

Gegenstand der Erfindung ist eine gattungsgemäße Fahrstabilitätsregelung für ein Fahrzeug so auszugestalten, daß die Fahrstabiltätsregelung gekennzeichnet ist durch eine Lenkwinkelerfassungseinrichtung zur Ermittlung eines Lenkeinschlagwinkels, eine Querbeschleunigungserfassungseinrichtung zur Ermitlung einer Querbeschleunigung, eine Recheneinrichtung zur Berechnung einer stabilen Grenzgeschwindigkeit aus den ermittelten Größen Lenkeinschlagwinkel und Querbeschleunigung unter Einbeziehung von weiteren Größen des Fahrzeugs und/ oder von Fahrsituationen, eine Geschwindigkeitserfassungseinrichtung zur Ermittlung einer aktuellen Fahrzeuggeschwindigkeit und eine Geschwindigkeitsregeleinrichtung, die die Fahrzeuggeschwindigkeit auf die berechnete stabile Grenzgeschwindigkeit regelt, sobald die Fahrzeuggeschwindigkeit die Tendenz zum Überschreiten der stabilen Grenzgeschwindigkeit aufweist.

Zur Erhöhung der Fahrstabilität ist es zweckmäßig, daß die stabile Grenzgeschwindigkeit direkt aus Größen ermittelt wird, die in einem ESP geregelten Fahrzeug vorliegen. Erfindungsgemäß wird die Grenzgeschwindigkeeit direkt nach der rekursiven Beziehung

$$v_{Grenz} = \sqrt{\frac{l * a_q}{\delta - \Delta\delta_{tol} - a_q * EG}}$$

ermittelt wird, mit

| | |
|---|---|
| $\delta$ - | Lenkeinschlagwinkel am Rad |
| $\Delta\delta_{tol}$ | tolerierte Lenkwinkelabweichung gegenüber dem linearen Fall |
| $1$ - | Abstand der Fahrzeugzeugachsen (Radstand) |
| $v_{Grenz}$ | stabile Grenzgeschwindigkeit |
| $EG$ - | Eigenlenkgradient des Fahrzeugs |
| $a_q$ - | Fahrzeugquerbeschleunigung. |

Nach einem vorteilhaften Ausführungsbeispiel wird die Querneigung des Fahrzeugs oder der Fahrbahn von der Horizontalebene ermittelt und die tolerierte Lenkwinkelabweichung in Abhängigkeit von der ermittelten Querneigung berechnet.

Zweckmäßig ist, daß in Fahrsituationen mit erhöhtem Traktionsbedarf die Lenkwinkelabweichung erhöht wird.

Vorteilhafte Weiterbildungen der Erfindung sind in den Unteransprüchen angegeben.

In der Zeichnung ist ein Fahrzeug mit ESP-Regelungssystem, Bremsanlage, Sensorik und Kommunikationsmöglichkeiten schematisch dargestellt. Die vier Räder sind mit 15, 16, 20, 21 bezeichnet. An jedem der Räder 15, 16, 20, 21 ist je ein Radsensor 22 bis 25 vorgesehen. Die Signale werden einer Elektronik-Steuereinheit 28 zugeführt, die anhand vorgegebener Kriterien aus den Raddrehzahlen die Fahrzeuggeschwindigkeit $v_{Ref}$ ermittelt. Weiterhin sind ein Gierratensensor 26, ein Querbeschleunigungssensor 27 und ein Lenkradwinkelsensor 29 mit der Komponente 28 verbunden. Jedes Rad weist außerdem eine individuell ansteuerbare Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen fahrerunabhängig angesteuert wird, die in der elektronischen Steuereinheit 28 erzeugt werden. Über ein von einem Bremspedal betätigten Hauptzylinder kann von dem Fahrer Bremsdruck in die Hydraulikleitungen eingesteuert werden. In dem Hauptzylinder bzw. den Hydraulikleitungen sind Drucksensoren P vorgesehen, mittels denen der Fahrerbremswunsch erfaßt werden kann. Über eine Schnittstelle(CAN) ist die Elektronik-Steuereinheit mit dem Motorsteuergerät verbunden

über das ESP-Regelungssystem mit Bremsanlage, Sensorik und Kommunikationsmöglichkeiten das die Ausstattungselemente

● vier Raddrehzahlsensoren

● Drucksensor (P)

● Querbeschleunigungssensor (LA)

● Gierratensensor (YR)

- Lenkradwinkelsensor (SWA)

- individuell ansteuerbare Radbremsen

- Hydraulikeinheit (HCU)

- Elektronik-Steuereinheit (ECU)

aufweist, läßt sich eine Vorhersage einer kritischen Fahrsituation und vorzugsweise deren Vermeidung ohne zusätzliche Sensoren realisieren. Dabei läßt sich ausgehend von der Gleichung für die stationäre Kreisfahrt des linearen Einspurmodells

$$\dot{\Psi} = \frac{\delta \cdot v}{l + v^2 \cdot EG}$$

und der Beziehung
mit
l Gierrate des Fahrzeugs
$\delta$- Lenkeinschlagwinkel der Vorderräder
v- Fahrzeuggeschwindigkeit
1- Achsabstand
EG- Eigenlenkgradient des Fahrzeugs
$a_q$- Fahrzeugquerbeschleunigung
die in einer Fahrsituation gefahrene stabile
Fahrzeuggeschwindigkeit über die Gleichung

$$v = \sqrt{\frac{l \cdot a_q}{\delta - a_q \cdot EG}}$$

berechnen.

Das Erreichen der Stabilitätsgrenze kündigt sich durch Verlassen des linearen Bereichs an. Somit kann die stabile Grenzgeschwindigkeit einer Fahrsituation durch Berücksichtigung einer tolerierten Lenkwinkelabweichung gegenüber dem linearen Verhalten bestimmt werden.

$$v_{Grenz} = \sqrt{\frac{l \cdot a_q}{\delta - \Delta\delta_{tol} - a_q \cdot EG}}$$

mit
$v_{Grenz}$ - stabile Grenzgeschwindigkeit
$\Delta\delta_{tol}$ - tolerierte Lenkwinkelabweichung gegenüber dem linearen Fall

Je größer dabei die tolerierte Lenkwinkelabweichung gewählt wird, desto höher wird die errechnete Grenzgeschwindigkeit und desto mehr wird die Stabilitätsreserve ausgenutzt.

Zweckmäßigerweise wird die Grenzgeschwindigkeit fortlaufend berechnet, wobei sie gleich Unendlich gesetzt wird, sollte für die aktuellen Eingangsgrößen keine reelle Lösung der obigen Gleichung existieren. Bei stabiler Fahrweise wird die Grenzgeschwindigkeit immer oberhalb der tatsächlichen Fahrzeuggeschwindigkeit liegen. Erst bei der Annäherung an die Stabilitätsgrenze wird die Grenzgeschwindigkeit erreicht bzw. überschritten. Das kann z.B. durch stärkeres Einlenken, durch Fahrzeugbeschleunigung oder durch Verringerung des Reibwerts zwischen Reifen und Fahrbahn und somit durch Verringerung der Querbeschleunigung verursacht werden. Dabei ist es unerheblich, ob das Fahrzeug bei Überschreiten der Stabilitätsgrenze untersteuert, übersteuert oder seitlich herausdriftet.

Erfindungsgemäß wird dem Überschreiten der Stabilitätsgrenze dadurch entgegengewirkt, daß ein Brems- und/oder ein Motoreingriff erfolgt, sobald die gemessene Fahrzeuggeschwindigkeit eine Tendenz zum Überschreiten der nach obiger Gleichung berechneten Grenzgeschwindigkeit aufweist. Der Brems- und/oder Motoreingriff erfolgt nun derart, daß die Fahrzeuggeschwindigkeit auf die Grenzgeschwindigkeit geregelt wird. Dadurch verbleibt das Fahrzeug im stabilen Grenzbereich. Es bleibt für den Fahrer gut beherrschbar, gleichzeitig werden heftige und unharmonische Regeleingriffe, wie sie die Giermomentenregelung bei überschrittener Stabilitätsgrenze erzeugt, vermieden.

Der Brems- und/oder Motoreingriff wird beendet, sobald die vom Fahrer gewünschte Fahrzeuggeschwindigkeit deutlich unterhalb der berechneten Grenzgeschwindigkeit liegt. Das kann z.B. durch Auflenken bei Kurvenausfahrt, durch Fahrzeugverzögerung oder durch Erhöhung des Reibwerts zwischen Reifen und Fahrbahn und somit durch Erhöhung der Querbeschleunigung verursacht werden.

Bei quergeneigter Fahrbahn kann die zur Berechnung der stabilen Grenzgeschwindigkeit verwendete Querbeschleunigung zu tief ermittelt werden. Um zu verhindern, daß die Grenzgeschwindigkeit zu niedrig berechnet wird, ist es zweckmäßig, die Querneigung der Fahrbahn geeignet zu bestimmen und die tolerierte Lenkwinkelabweichung in Abhängigkeit der Querneigung zu erhöhen.

In Fahrsituationen, in denen erhöhter Traktionsbedarf besteht, also z.B. bei Fahren in Sand oder Tiefschnee, können zeitweise hohe Lenkeinschlagwinkel auftreten, ohne daß sich das Fahrzeug an der Stabilitätsgrenze bewegt. Gleichzeitig sind in diesen Situationen Antriebsmomentenreduktionen extrem störend, da sie zum Eingraben und Festfahren des Fahrzeugs führen können. Diese Situationen sind z.B. durch Radbremsschlupf an mindestens einem Vorderrad bei positivem Antriebsmoment und bei fehlendem Bremsmoment der Radbremse gekennzeichnet. Wird diese Situation erkannt, ist es ebenfalls zweckmäßig, die tolerierte Lenkwinkelabweichung zu erhöhen.

**Patentansprüche**

1. Verfahren zur Regelung der Fahrstabilität eines Fahrzeugs, bei dem anhand von mehreren Eingangsgrößen die Fahrgeschwindigkeit des Fahrzeugs auf eine Grenzgeschwindigkeit geregelt wird, wobei auf Basis von Meßgrößen, die mit Hilfe von Erfassungseinrichtungen ermittelt werden und die den aktuellen Lenkwinkel und die aktuelle Querbeschleunigung wiedergeben, unter Einbeziehung von weiteren Größen des Fahrzeugs und/oder der Fahrsituation eine modellbasierte stabile Grenzgeschwindigkeit des Fahrzeugs ermittelt wird, wobei ein Vergleich der Fahrgeschwindigkeit mit der modellbasierten stabilen Grenzgeschwindigkeit des Fahrzeugs vorgenommen wird und nach Maßgabe des Vergleichsergebnisses die Fahrgeschwindigkeit zu der Grenzgeschwindigkeit hingeführt wird, wenn die Grenzgeschwindigkeit von der Fahrgeschwindigkeit überschritten wird **dadurch gekennzeichnet, daß** die modellbasierte stabile Grenzgeschwindigkeit nach der rekursiven Beziehung

$$v_{Grenz} = \sqrt{\frac{l * a_q}{\delta - \Delta\delta_{tol} - a_q * EG}}$$

ermittelt wird, mit

$\delta$ - Lenkeinschlagwinkel am Rad
$\Delta\delta_{tol}$ tolerierte Lenkwinkelabweichung gegenüber dem linearen Fall
$1$ - Abstand der Fahrzeugzeugachsen (Radstand)
$v_{Grenz}$ stabile Grenzgeschwindigkeit
$EG$ - Eigenlenkgradient des Fahrzeugs
$a_q$ - Fahrzeugquerbeschleunigung.

2. Verfahren nach Anspruch 1, **dadurch gekennzeichnet, daß** die tolerierte Lenkwinkelabweichung nach Maßgabe der Querbeschleunigung und der Fahrgeschwindigkeit ermittelt wird.

3. Verfahren nach Anspruch 1 oder 2, **dadurch gekennzeichnet, daß** die Querneigung des Fahrzeugs oder der Fahrbahn von der Horizontalebene ermittelt wird und die tolerierte Lenkwinkelabweichung in Abhängigkeit von der ermittelten Querneigung berechnet wird.

4. Verfahren nach einem der Ansprüche 1 bis 3, **dadurch gekennzeichnet, daß** in Fahrsituationen mit erhöhtem Traktionsbedarf die tolerierte Lenkwinkelabweichung erhöht wird.

5. Fahrstabilitätsregelung für ein Fahrzeug, mit einer Regeleinrichtung zum Regeln der Fahrzeuggeschwindigkeit auf eine Grenzgeschwindigkeit, umfassend eine Lenkwinkelerfassungseinrichtung zur Ermittlung eines Lenkeinschlagwinkels, eine Querbeschleunigungserfassungseinrichtung zur Ermitlung einer Querbeschleunigung, eine Recheneinrichtung zur Berechnung einer stabilen Grenzgeschwindigkeit aus den ermittelten Größen Lenkeinschlagwinkel und Querbeschleunigung, eine Geschwindigkeitserfassungseinrichtung zur Ermittlung einer aktuellen Fahrzeuggeschwindigkeit und eine Geschwindigkeitsregeleinrichtung, die die Fahrzeuggeschwindigkeit auf die berechnete stabile Grenzgeschwindigkeit regelt, sobald die Fahrzeuggeschwindigkeit die Tendenz zum Überschreiten der stabilen Grenzgeschwindigkeit aufweist, **dadurch gekennzeichnet, daß** die Recheneinrichtung die stabile Grenzgeschwindigkeit nach der rekursiven Beziehung

$$v_{Grenz} = \sqrt{\frac{l \cdot a_q}{\delta - \Delta\delta_{tol} - a_q \cdot EG}}$$

ermittelt, mit
$\delta$ - Lenkeinschlagwinkel der Vorderräder
$v$ - Fahrzeuggeschwindigkeit
$l$ - Achsabstand
$EG$ - Eigenlenkgradient des Fahrzeugs
$a_q$ - Fahrzeugquerbeschleunigung
$v_{Grenz}$ - stabile Grenzgeschwindigkeit
$\Delta\delta_{tol}$ - tolerierte Lenkwinkelabweichung gegenüber dem linearen Fall.

6. Fahrstabilitätsregelung nach Anspruch 5, **dadurch gekennzeichnet, daß** eine Querneigungserfassungseinrichtung eine Querneigung der Fahrbahn ermittelt und die tolerierte Lenkwinkelabweichung in Abhängigkeit der ermittelten Querneigung erhöht.

7. Fahrstabilitätsregelung nach Anspruch 5 oder 6, **dadurch gekennzeichnet, daß** eine Ermittlungseinheit die Traktion des Fahrzeugs und eine Ermittlungseinheit die Fahrsituationen ermittelt und in Fahrsituationen mit erhöhtem Traktionsbedarf die tolerierte Lenkwinkelabweichung erhöht wird.

**Claims**

1. Method for controlling the driving stability of a vehicle, in which the speed of the vehicle is adjusted to a limiting speed on the basis of a plurality of input variables, wherein a model-based stable limiting speed of the vehicle is determined on the basis of measurement variables which are determined with the aid of detection devices and which represent the current steering angle and the current lateral acceleration, using further variables of the vehicle and/or the driving situation, wherein the speed is compared with the model-based stable limiting speed of the vehicle, and the speed is adjusted to the limiting speed in accordance with the comparison result if the limiting speed is exceeded by the speed, **characterized in that** the model-based stable limiting speed is determined according to the recursive relationship:

$$\upsilon_{limit} = \sqrt{\frac{\frac{l}{} * a_q}{\delta - \Delta\delta_{tol} - a_q * EG}}$$

where

    $\delta$ - Steering lock angle at the wheel
    $\Delta\delta_{tol}$ - Tolerated steering angle deviation with respect to the linear case
    $1$ - Distance between the vehicle axles (wheel base)
    $\upsilon_{Grenz}$ - Stable limiting speed
    $EG$ - Vehicle's steering gradient
    $a_q$ - Lateral acceleration of the vehicle.

**2.** Method according to Claim 1, **characterized in that** the tolerated steering angle deviation is determined in accordance with the lateral acceleration and the speed.

**3.** Method according to Claim 1 or 2, **characterized in that** the lateral inclination of the vehicle or of the carriageway from the horizontal plane is determined and the tolerated steering angle deviation is calculated as a function of the determined lateral inclination.

**4.** Method according to one of Claims 1 to 3, **characterized in that** the tolerated steering angle deviation is increased in driving situations with an increased traction requirement.

**5.** Driving stability control system for a vehicle, having a control device for adjusting the vehicle speed to a limiting speed, comprising a steering angle detection device for determining a steering lock angle, a lateral acceleration detection device for determining a lateral acceleration, a computing device for calculating a stable limiting speed from the determined variables of the steering lock angle a lateral acceleration, a speed detection device for determining a current vehicle speed and a speed control device which adjusts the vehicle speed to the calculated stable limiting speed as soon as the vehicle speed has the tendency to exceed the stable limiting speed, **characterized in that** the computing device determines the stable limiting speed according to the recursive relationship:

$$\upsilon_{Grenz} = \sqrt{\frac{\frac{l}{} \cdot a_q}{\delta - \Delta\delta_{tol} - a_q \cdot EG}}$$

where

    $\delta$ - Steering lock angle of the front wheels
    $\upsilon$ - Vehicle speed
    $l$ - Wheel base
    $EG$ - Vehicle's steering gradient
    $a_q$ - Lateral acceleration of the vehicle
    $\upsilon_{Grenz}$ - Stable limiting speed
    $\Delta\delta_{tol}$ - Tolerated steering angle deviation with respect to the linear case.

**6.** Driving stability control system according to Claim 5, **characterized in that** a device for detecting the lateral inclination determines a lateral inclination of the carriageway and increases the tolerated steering angle deviation as a function of the determined lateral inclination.

**7.** Driving stability control system according to Claim 5 or 6, **characterized in that** a determining unit determines the traction of the vehicle and a determining unit determines the driving situations, and the tolerated steering angle deviation is increased in driving situations with an increased traction requirement.

**Revendications**

**1.** Procédé de régulation de la stabilité de conduite d'un véhicule, selon lequel la vitesse de déplacement du véhicule est régulée à une vitesse limite au moyen de plusieurs grandeurs d'entrée, une vitesse limite stable du véhicule basée sur un modèle étant déterminée en se basant sur des grandeurs mesurées qui sont déterminées à l'aide de dispositifs de détection et qui restituent l'angle de direction actuel et l'accélération transversale actuelle, en intégrant d'autres grandeurs du véhicule et/ou la situation de conduite, une comparaison de la vitesse de déplacement avec la vitesse limite stable du véhicule basée sur un modèle étant effectuée et, d'après le résultat de la comparaison, la vitesse de déplacement étant amenée à la vitesse limite lorsque la vitesse limite est dépassée par la vitesse de déplacement, **caractérisé en**

**ce que** la vitesse limite stable basée sur un modèle est déterminée d'après la relation récursive

$$v_{Grenz} = \sqrt{\frac{l * a_q}{\delta - \Delta\delta_{tol} - a_q * EG}}$$

avec

$\delta$ désignant l'angle de braquage de la direction au niveau de la roue

$\Delta\delta_{tol}$ l'écart toléré de l'angle de direction par rapport au cas linéaire

l l'écart entre les essieux du véhicule (empattement)

$v_{Grenz}$ la vitesse limite stable

EG le gradient de direction propre du véhicule et

$a_q$ l'accélération transversale du véhicule.

2. Procédé selon la revendication 1, **caractérisé en ce que** l'écart toléré de l'angle de direction est déterminé en fonction de l'accélération transversale et de la vitesse du véhicule.

3. Procédé selon la revendication 1 ou 2, **caractérisé en ce que** l'inclinaison transversale du véhicule ou de la chaussée par rapport au plan horizontal est déterminée et l'écart toléré de l'angle de direction est calculé en fonction de l'inclinaison transversale déterminée.

4. Procédé selon l'une des revendications 1 à 3, **caractérisé en ce que** l'écart toléré de l'angle de direction est augmenté dans les situations de conduite où la traction requise est plus importante.

5. Régulateur de stabilité de conduite pour un véhicule, comprenant un dispositif de régulation pour réguler la vitesse du véhicule à une vitesse limite, comprenant un dispositif de détection de l'angle de direction pour déterminer un angle de braquage de la direction, un dispositif de détection de l'accélération transversale pour déterminer une accélération transversale, un dispositif de calcul pour calculer une vitesse limite stable à partir des grandeurs déterminées de l'angle de braquage de la direction et de l'accélération transversale, un dispositif de détection de la vitesse pour déterminer la vitesse actuelle du véhicule et un dispositif de régulation de la vitesse qui régule la vitesse du véhicule à la vitesse limite stable calculée dès que la vitesse du véhicule a tendance à vouloir dépasser la vitesse limite stable, **caractérisé en ce que** l'unité de calcul détermine la vitesse limite stable d'après la relation récursive

$$v_{Grenz} = \sqrt{\frac{l * a_q}{\delta - \Delta\delta_{tol} - a_q * EG}}$$

avec

$\delta$ désignant l'angle de braquage de la direction au niveau des roues avant

v la vitesse du véhicule

l l'empattement

EG le gradient de direction propre du véhicule $a_q$ l'accélération transversale du véhicule $v_{Grenz}$ la vitesse limite stable et

$\Delta\delta_{tol}$ l'écart toléré de l'angle de direction par rapport au cas linéaire.

6. Régulateur de stabilité de conduite selon la revendication 5, **caractérisé en ce qu'**un dispositif de détection de l'inclinaison transversale détermine l'inclinaison transversale de la chaussée et augmente l'écart toléré de l'angle de direction en fonction de l'inclinaison transversale déterminée.

7. Régulateur de stabilité de conduite selon la revendication 5 ou 6, **caractérisé en ce qu'**une unité de détermination détermine la traction du véhicule et une unité de détermination les situations de conduite et l'écart toléré de l'angle de direction est augmenté dans les situations de conduite où la traction requise est plus importante.

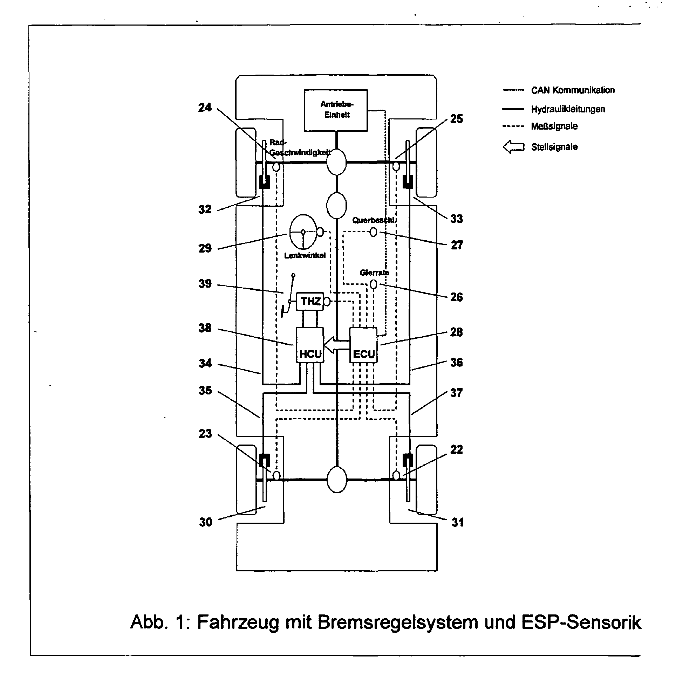

**Abb. 1: Fahrzeug mit Bremsregelsystem und ESP-Sensorik**

**IN DER BESCHREIBUNG AUFGEFÜHRTE DOKUMENTE**

**In der Beschreibung aufgeführte Patentdokumente**

- EP 0945320 A1
- DE 19907633 A1